# DEMANDE DE BREVET EUROPEEN

(11) **EP 4 411 169 A1**
(43) Date de publication de la demande: **07.08.2024**
(21) Numéro de dépôt: 24153654.9
(22) Date de dépôt: 24.01.2024
(51) Int. Cl.: F16H 1/22, B64D 27/24, B64D 35/08, F01D 15/10, F02C 6/20, F02C 7/36, B64D 27/02

(54) **TURBOMACHINE COMPRENANT UN REDUCTEUR DE VITESSE ET AU MOINS UNE MACHINE ELECTRIQUE**

(30) Priorité: 31.01.2023 FR 2300890
(71) Demandeur: Safran Transmission Systems, 92700 Colombes (FR)
(72) Inventeur: FERNANDEZ, Maxime, 77550 MOISSY-CRAMAYEL (FR); DOUY,Yohan, 77550 MOISSY-CRAMAYEL (FR); MORELLI, Boris Pierre Marcel, 77550 MOISSY-CRAMAYEL (FR); PELTIER, Jordane Emile André, 77550 MOISSY-CRAMAYEL (FR)
(74) Mandataire: Gevers & Orès

(57) **Abrégé**

L'invention concerne un ensemble pour une turbomachine d'aéronef, comprenant un réducteur de vitesse (4) comportant un pignon d'entrée (40) relié à un arbre de puissance (2) de la turbomachine et un pignon de sortie (41) relié à un arbre d'hélice (3) de la turbomachine.

Selon l'invention, l'ensemble comprend deux machines électriques (60) qui sont chacune configurée de manière à fournir de la puissance électrique à l'arbre d'hélice ou à prélever de la puissance mécanique sur l'arbre d'hélice, chaque machine électrique comprenant un rotor (61) et un stator (62), le stator étant destiné à être relié à un carter de la turbomachine, et en ce que le réducteur de vitesse comprend deux lignes intermédiaires de transmission (55) sensiblement parallèles et configurées pour transmettre le couple du pignon d'entrée (40) au pignon de sortie (41), chaque rotor (61) étant entraîné en rotation respectivement par un pignon d'une ligne intermédiaire (55).

## Description

### Domaine de l'invention

La présente invention concerne le domaine général de l'aéronautique. Elle vise en particulier un ensemble pour une turbomachine équipée d'un réducteur mécanique de vitesse et d'au moins une machine électrique coopérant avec le réducteur mécanique.

### Arrière-plan technique

Le rôle d'un réducteur mécanique est de modifier le rapport de vitesse et de couple entre l'axe d'entrée et l'axe de sortie d'un système mécanique.

Les aéronefs équipés de turbopropulseurs sont généralement équipés d'un réducteur mécanique (connu sous l'acronyme anglais « PGB » pour Propeller Gear Box) permettant d'adapter les vitesses de rotation entre la turbine et l'hélice tout en permettant de générer un décalage entre l'axe de rotation de l'hélice et l'axe de rotation de la turbine. Ce décalage, aussi appelé « Offset », permet une bonne intégration de l'entrée d'air verticalement sous ce réducteur.

Dans l'objectif d'améliorer les performances et l'efficacité de ces turbopropulseurs durant certaines phases de vol (Take-off, taxiing, ...) plusieurs solutions sont envisageables. Une de ces solutions consiste à hybrider le turbopropulseur en ajoutant une machine électrique (en mode moteur) au réducteur afin de fournir de la puissance supplémentaire lors des phases de vol concernées. Il est aussi possible de se servir de cette machine électrique (en mode générateur) pour récupérer de l'énergie lors de certaines phases de vol.

Il existe plusieurs architectures de réducteur. Dans l'état de l'art des turbopropulseurs, les réducteurs sont de type planétaire avec offset ou épicycloïdal avec offset. Il existe aussi des architectures dites compound.
- Sur un réducteur planétaire à offset, le porte-satellites est fixe et la couronne constitue l'arbre de sortie du dispositif qui tourne dans le sens inverse du solaire.
- Sur un réducteur épicycloïdal à offset, la couronne est fixe et le porte-satellites constitue l'arbre de sortie du dispositif qui tourne dans le même sens que le solaire.
- Sur un réducteur compound, aucun élément n'est fixé en rotation et la puissance est divisée sur deux lignes intermédiaires parallèles. La roue de sortie tourne dans le même sens que le pignon d'entrée.

Un réducteur de type épicycloïdal à offset comprend un pignon d'entrée qui engrène sur une roue de l'étage n°1 qui elle-même entraine un pignon central appelé solaire engrenant sur des pignons appelés satellites qui sont eux même en prise avec une couronne. Les satellites sont maintenus par un châssis appelé porte-satellites. Le solaire, la couronne et le porte-satellites sont des planétaires car leurs axes de révolution coïncident avec l'axe longitudinal X de l'hélice. Les satellites ont chacun un axe de révolution différents équirépartis sur le même diamètre de fonctionnement autour de l'axe des planétaires. Ces axes sont parallèles à l'axe longitudinal X.

Un réducteur de type compound comprend un pignon d'entrée, sur lesquels deux pignons intermédiaires (appelés idlers) viennent prélever de la puissance. Les pignons idlers entrainent ensuite, par l'intermédiaire d'un deuxième jeu de dentures, la ligne de sortie. En jouant sur le nombre de dents des différents pignons, il est possible d'obtenir un rapport de réduction de vitesse entre la ligne d'entrée et la ligne de sortie.

Les réducteurs peuvent être composés d'un ou plusieurs étages d'engrènement. Cet engrènement est assuré de différentes façons comme par contact, par friction ou encore par champs magnétique.

Il existe plusieurs types d'engrènement par contact comme avec des dentures droites, hélicoïdales ou en chevron.

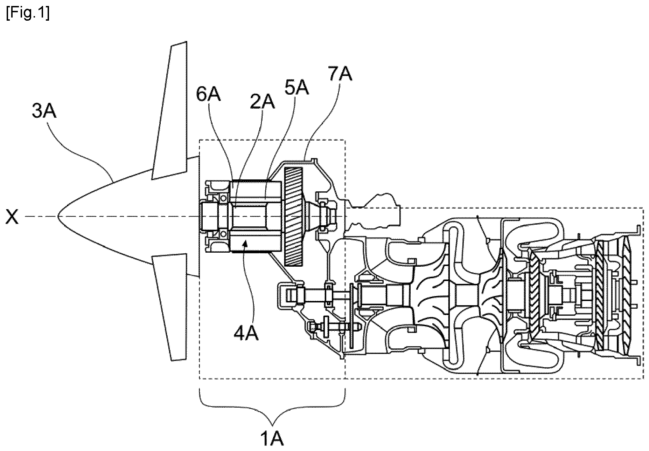

Le document de brevet FR-B1-3073569 et le document de brevet EP-B1-3201492 décrivent chacun un réducteur de vitesse 1A permettant d'entraîner l'arbre 2A d'une hélice 3A d'un turbopropulseur en rotation tel qu'illustré sur la figure 1. Le réducteur de vitesse 1A est équipé d'une machine électrique 4A destinée à fournir de la puissance électrique à l'aéronef. La machine électrique 4A est agencée dans le volume dédié au réducteur de vitesse 1A de manière à ne pas impacter l'encombrement dans cette zone du turbopropulseur. La machine électrique 4A comprend un rotor 5A creux qui est relié de manière amovible à l'arbre 2A de l'hélice et coaxial avec celui-ci. En particulier, l'arbre 2A de l'hélice traverse le rotor 5A. La machine électrique 1A comprend un stator 6A qui est relié à un carter statorique 7A du turbopropulseur. Le carter statorique 7A entoure l'arbre 2A et comprend un alésage dans lequel est monté le stator 6A. Ce dernier s'étend à l'extérieur du rotor 6A. La configuration de la machine électrique est compacte. Toutefois, ce type d'intégration est viable tant que le niveau de puissance électrique demandé par les équipements de l'aéronef reste modéré. En effet, plus la machine électrique est puissante et plus son volume augmente, ce qui peut fortement limiter son intégration au sein du réducteur de vitesse. Or, de nombreux équipements sont de plus en plus alimentés en énergie électrique pour réduire l'impact environnemental.

La turbomachine peut être équipée de plusieurs machines électriques comme dans le document US-B1-10180080 pour augmenter la puissance électrique ce qui peut impacter l'encombrement du carter statorique et de la nacelle entourant le générateur de gaz du turbopropulseur.

Par ailleurs, lorsque le réducteur de vitesse est de type compound, il est nécessaire d'équilibrer les charges entre les deux lignes intermédiaires comme cela est prévu dans les documents de brevet EP-B1-3356699, FR-A1-3035163 et EP-A1-3274609, car la distribution entre les lignes n'est pas équitable. Cependant, ces documents ne prennent pas en compte l'intégration de machines électriques par rapport au réducteur de vitesse et notamment l'équilibrage des charges de celles-ci. Les configurations de ces documents prévoient de manière générale une balance hydraulique ou des souplesses sur les arbres pour équilibrer les chargements.

Il existe un besoin de résoudre tout ou partie des inconvénients précités.

### Résumé de l'invention

L'objectif de la présente invention est de fournir une solution simple et économique permettant d'intégrer deux machines électriques en coopération avec un réducteur de vitesse sans impacter l'encombrement et la configuration des organes à proximité.

Nous parvenons à cet objectif conformément à l'invention grâce à un ensemble pour une turbomachine d'aéronef, l'ensemble comprenant :
- un arbre de puissance,
- un arbre d'hélice centré sur un axe longitudinal X et destiné et configuré de sorte à entraîner au moins une hélice de la turbomachine, et
- au moins un réducteur de vitesse destiné et configuré de sorte à être entraîné par l'arbre de puissance et à entraîner en rotation l'arbre d'hélice à une vitesse différente de celle de l'arbre de puissance, le réducteur de vitesse comportant un pignon d'entrée relié à l'arbre de puissance et un pignon de sortie relié à l'arbre d'hélice,

l'ensemble comprenant deux machines électriques qui sont chacune configurée de manière à fournir de la puissance électrique à l'arbre d'hélice ou à prélever de la puissance mécanique sur l'arbre d'hélice, chaque machine électrique comprenant un rotor et un stator, le stator étant destiné et configuré de sorte à être relié à un carter de la turbomachine, et
le réducteur de vitesse comprenant deux lignes intermédiaires de transmission qui sont sensiblement parallèles et qui sont configurées pour transmettre le couple du pignon d'entrée au pignon de sortie, chaque rotor étant entraîné en rotation respectivement par un pignon d'une ligne intermédiaire.

Ainsi, cette solution permet d'atteindre l'objectif susmentionné. En particulier, le fait d'agencer deux machines électriques dont chaque rotor est entraîné respectivement par une ligne intermédiaire permet de répartir la puissance électrique totale des deux machines électriques sur deux lignes distinctes. Cela permet également de réguler les déséquilibres de charges entre les deux lignes de transmission tout en limitant l'encombrement axial. Plus précisément, les deux machines électriques permettent de créer un système d'équilibrage. Avec deux machines électriques, il est possible d'injecter un peu plus de puissance sur la ligne la moins chargée et d'injecter un peu moins de puissance sur la ligne la plus chargée pour que les chargements entre les deux lignes s'équilibrent. Un déséquilibre inverse dans la puissance fournie peut être créé. A cela s'ajoute le fait que la configuration des machines électriques et du réducteur de type compound permet de ne pas impacter l'encombrement radial et axial.

L'ensemble comprend également l'une ou plusieurs des caractéristiques suivantes, prises seules ou en combinaison :
- le pignon d'entrée comprend un axe d'entrée décalé par rapport à un axe de sortie du pignon de sortie.
- chaque ligne intermédiaire de transmission comprend un premier pignon intermédiaire monté rotatif autour d'un axe de rotation et comprenant une première denture destinée et configurée de sorte à engrener avec une denture externe du pignon d'entrée.
- chaque ligne intermédiaire de transmission comprend un deuxième pignon intermédiaire monté rotatif autour d'un axe de rotation et comprenant une deuxième denture destinée et configurée de sorte à engrener avec une denture externe du pignon de sortie.
- le pignon d'entrée engrène avec deux premiers pignons intermédiaires des lignes de transmission intermédiaire et le pignon de sortie engrène avec deux deuxièmes pignons intermédiaires des lignes de transmission intermédiaire et en ce que chaque premier pignon intermédiaire et chaque deuxième pignon intermédiaire comprend une première hélice et une deuxième hélice s'engrenant chacune avec une hélice correspondante du pignon d'entrée et du pignon de sortie.
- le réducteur de vitesse comprend au moins deux roues d'entraînement qui sont chacune d'une part, entraînée en rotation respectivement par le premier pignon intermédiaire d'une ligne de transmission intermédiaire et qui d'autre part, entraîne en rotation un pignon complémentaire monté sur chaque rotor, le pignon complémentaire du rotor comprenant un axe de rotation parallèle à l'axe d'entrée et parallèle à l'axe de la roue d'entraînement.
- chaque roue d'entraînement comprend une première denture externe engrenant avec une denture externe d'un premier pignon intermédiaire et une deuxième denture externe engrenant avec une denture externe du pignon complémentaire.
- le stator s'étend radialement à l'extérieur du rotor.
- les machines électriques sont agencées en aval du réducteur de vitesse.
   - - l'axe de rotation du premier pignon intermédiaire est parallèle à l'axe longitudinal.
   - - l'axe de rotation du deuxième pignon intermédiaire est parallèle à l'axe longitudinal.
   - - l'axe de rotation du pignon de sortie est coaxial à l'axe longitudinal.
   - - la machine électrique est annulaire.
   - - la machine électrique présente une forme générale cylindrique.

L'invention concerne également une turbomachine comprenant un ensemble présentant l'une quelconque des caractéristiques précédentes et une entrée d'air agencée en-dessous du réducteur de vitesse, selon une direction verticale perpendiculaire à l'axe longitudinal.

L'invention concerne en outre un aéronef équipé d'une telle turbomachine.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 représente un exemple de turbopropulseur comprenant un mécanisme de réduction et une machine électrique selon l'art antérieur ;
La figure 2 illustre un exemple d'agencement d'un mécanisme de réduction dans une turbomachine selon l'invention ;
La figure 3 est une vue de dessous d'un exemple d'agencement d'un mécanisme de réduction et d'au moins une machine électrique selon l'invention ;
La figure 4 est une vue en perspective d'un exemple de mécanisme de réduction coopérant avec deux machines électriques selon l'invention ;
La figure 5 est une vue en perspective d'un exemple d'agencement d'une entrée d'air d'une turbomachine selon l'invention ;
La figure 6 est une vue avant du mécanisme de réduction selon la figure 5 ; et
La figure 7 est une vue arrière du mécanisme de réduction selon la figure 5 ;

### Description détaillée de l'invention

La figure 1 montre une vue en coupe axiale d'une turbomachine équipée d'un mécanisme de réduction et qui a déjà été décrite précédemment.

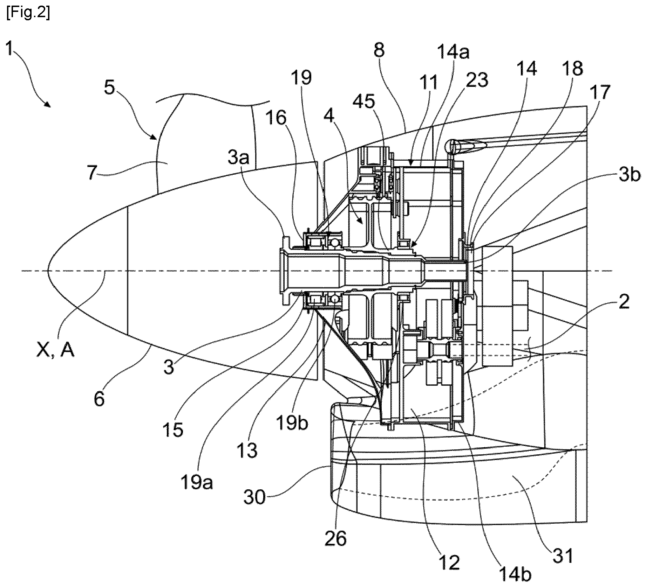

La figure 2 représente une turbomachine 1 d'axe longitudinal X. La turbomachine 1 illustrée est un turbopropulseur équipé d'une seule hélice non carénée destinée à être montée sur un aéronef. Le turbopropulseur peut comprendre d'un doublet d'hélices contrarotatives, non carénées. Les turbopropulseurs sont connus sous l'expression anglaise « open rotor ». Bien entendu, la turbomachine peut être un turboréacteur simple flux ou double flux.

La turbomachine comprend un arbre de puissance 2 (représenté en pointillé sur la figure 2), un arbre d'hélice 3 et un mécanisme de réduction. Le mécanisme de réduction est avantageusement un réducteur de vitesse 4 qui est destiné et configuré de sorte à être entraîné par l'arbre de puissance 2 et à entraîner en rotation l'arbre d'hélice 3 à une vitesse différente de celle de l'arbre de puissance.

De manière avantageuse, la vitesse de l'arbre de puissance 2 est supérieure à celle de l'arbre d'hélice 3. À titre d'exemple, la vitesse de l'arbre de puissance 2 est de l'ordre de 25000 tours par minute tandis que la vitesse de l'arbre d'hélice 3 est de l'ordre de 2000 tours par minutes. Cela permet un entraînement efficace de l'arbre d'hélice 3 pour une propulsion efficace de l'aéronef.

L'arbre d'hélice 3 présente un axe de rotation A qui est centré sur l'axe longitudinal X. De manière avantageuse, l'arbre d'hélice 3 s'étend entre une première extrémité 3a et une deuxième extrémité 3b.

La turbomachine comprend avantageusement une hélice 5 non carénée qui est reliée à l'arbre d'hélice 3. L'arbre d'hélice 3 est destiné et configuré de sorte à entrainer l'hélice 5 en rotation de sorte à réaliser la propulsion de l'aéronef. L'hélice 5 comprend un carter cylindrique 6 qui est fixé à la première extrémité 3a de l'arbre d'hélice 3.

Chaque hélice 5 comprend des pales 7 qui sont disposées régulièrement autour de l'axe longitudinal X. Les pales 7 comprennent des pieds qui sont logés chacun respectivement dans un logement prévu dans un anneau (non représenté) et s'étendent depuis cet anneau. L'anneau est centré sur l'axe longitudinal X et est solidaire en rotation du carter cylindrique 6.

Comme nous pouvons le voir sur la figure 2, le réducteur de vitesse 4 est positionné dans la partie amont de la turbomachine.

Dans la présente invention, les termes « amont » et « aval » sont définis par rapport à la circulation des gaz dans la turbomachine et ici suivant l'axe longitudinal X et à la figure 2 de gauche à droite.

Le réducteur de vitesse 4 est agencé dans un volume interne d'une nacelle 8 où il y a peu de place disponible. La nacelle 8 comprend le carter cylindrique 6 de l'hélice. La nacelle 8 entoure de manière générale le générateur de gaz de la turbomachine.

En particulier, la turbomachine comporte schématiquement un carter statorique 11. Le carter statorique 11 est agencé de manière à former une enceinte 12 entourant le réducteur de vitesse 4. Le carter statorique 11 est avantageusement indépendant des carters de la turbomachine tels que le carter d'entrée de la turbomachine. Le carter statorique 11 est solidarisé à la nacelle 8 de la turbomachine. Un brouillard de lubrifiant règne dans l'enceinte 12. L'enceinte 12 est traversée au moins en partie par l'arbre d'hélice 3 suivant l'axe longitudinal X.

Le carter statorique 11 comprend de manière avantageuse, mais non limitativement, au moins une partie amont 13 et une partie aval 14. La partie amont 13 et la partie aval 14 sont séparées l'une de l'autre ici. La partie amont 13 du carter statorique 11 comprend une première ouverture 15 permettant le passage de l'arbre d'hélice 3. La première ouverture 15 est délimitée par une paroi cylindrique 16 centrée sur l'axe longitudinal X.

La partie aval 14 comprend une deuxième ouverture 17 permettant le passage au moins en partie du système de changement de pas 10. La deuxième ouverture 17 est délimitée par une jupe cylindrique 18 qui est centrée sur l'axe longitudinal X.

La partie amont 13 et la partie aval 14 sont fixées entre elles par exemple à l'aide de bride radiale et d'une liaison boulonnée. La partie aval 14 peut être réalisée d'une seule pièce ou être réalisée en deux portions 14a, 14b comme c'est le cas sur la figure 2.

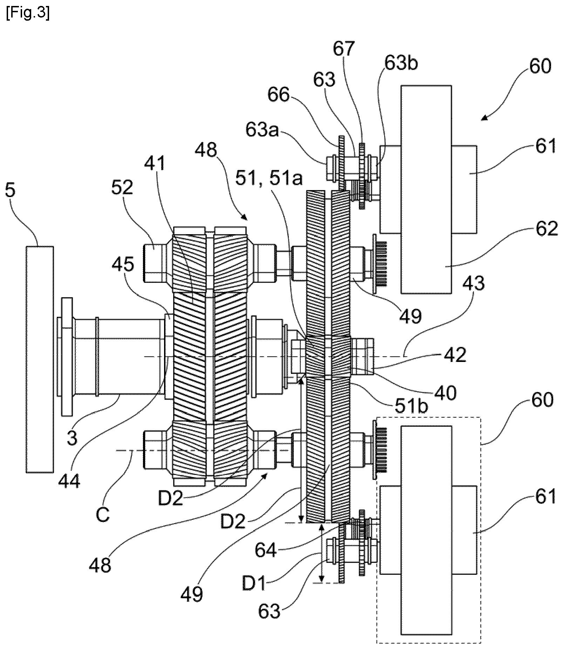

En référence à la figure 3, l'arbre d'hélice 3 est entraîné en rotation par rapport au carter 11 grâce à des paliers. Dans le présent exemple deux paliers amont 19 sont montés en amont de l'enceinte 12. De manière avantageuse, les deux paliers amont 19 sont montés en amont du réducteur de vitesse 4. Chaque palier amont 19 comprend une bague interne solidaire de l'arbre d'hélice 3 et une bague externe solidaire de la paroi cylindrique 16 du carter. Sur l'exemple illustré, le premier palier amont 19a comprend des roulements à rouleaux et le deuxième palier amont 19b comprend des roulements à billes.

L'arbre d'hélice 3 est également entraîné en aval par un palier aval 23 de manière avantageuse. Le palier aval 23 est monté vers l'aval de l'enceinte 12. Plus précisément, le palier aval 23 est monté en aval d'un pignon de sortie 41 qui sera décrit plus en détail ultérieurement. Le palier aval 23 comprend une bague interne qui est solidaire d'un arbre cylindrique 45 du pignon de sortie 41. La palier aval 23 comprend une bague externe qui est solidaire d'une paroi annulaire 26 du carter statorique 11.

L'enceinte 12 est de manière avantageuse mais non limitativement fermée en amont par des joints au niveau des paliers amont 19 permettant la traversée de l'arbre d'hélice 3, et en aval par des joints au niveau de la jupe cylindrique 18.

Sur la figure 3, le réducteur de vitesse 4 comprend un train d'engrenage à lignes intermédiaires de transmission qui est également appelé réducteur composé ou « compound » dans la terminologie anglo-saxonne. Le réducteur de vitesse 4 est également connu sous l'acronyme anglais PGB pour « Propeller Gear Box » ou RGB pour « Réduction Gear Box ». Le réducteur de vitesse de type compound nécessite un système d'équilibrage de charge afin d'égaliser les charges entre des lignes intermédiaires..

Le réducteur de vitesse 4 comporte un pignon d'entrée 40 et un pignon de sortie 41 qui sont mobiles en rotation. Le pignon d'entrée 40 est relié à l'arbre de puissance. De manière avantageuse, le pignon d'entrée 40 est porté par un arbre 42 et sont coaxiaux. Dans le présent mode de réalisation, le pignon d'entrée 40 présente un axe d'entrée 43 qui est parallèle à l'axe longitudinal X de la turbomachine. L'arbre de puissance 2 est couplé à l'arbre 42 du pignon d'entrée 40 par exemple à l'aide de cannelures de sorte que l'arbre de puissance 2 soit solidaire du pignon d'entrée 40. L'arbre de puissance 2 entraîne ainsi en rotation le pignon d'entrée 40.

L'arbre de puissance 2 est de manière avantageuse un arbre de turbine que comprend classiquement une turbomachine.

Le pignon de sortie 41 est relié à l'arbre d'hélice 3. La liaison est réalisée par exemple à l'aide de cannelures de sorte que l'arbre d'hélice 3 soit solidaire du pignon de sortie 41. Le pignon de sortie 41 présente un axe de sortie 44 qui est parallèle à l'axe d'entrée 43 du pignon d'entrée 40. En particulier, l'axe de sortie 44 est confondu avec celui de l'arbre d'hélice 3 (et avec l'axe longitudinal). Le pignon de sortie est autrement dit mobile en rotation autour de l'axe 44 colinéaire avec l'axe longitudinal X. En d'autres termes, l'axe d'entrée 43 du pignon d'entrée 40 est décalé, ici radialement, de l'axe de sortie 44 du pignon de sortie 41.

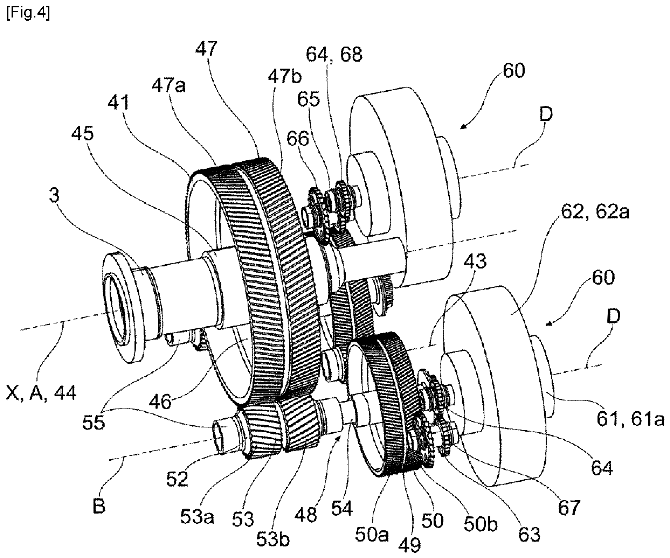

Sur la figure 4, le pignon de sortie 41 comprend dans cet exemple de réalisation un arbre cylindrique 45 s'étendant suivant l'axe de sortie 44. Le pignon de sortie 41 comprend une jante 46 qui s'étend radialement autour de l'arbre cylindrique 45 et qui porte au moins une denture externe 47.

Sur les figures 3 et 4, le réducteur de vitesse 4 comprend des moyens de transmission de couple 48 qui sont configurés pour transmettre le couple du pignon d'entrée 40 au pignon de sortie 41. En particulier, la puissance transmise par le pignon d'entrée 40 est distribuée par les moyens de transmission de couple 48 avant d'être transférée au pignon de sortie 41.

Dans le présent exemple, les moyens de transmission de couple 48 comprennent deux lignes intermédiaires de transmission 55. Les deux lignes intermédiaires 55 sont sensiblement parallèles (plus ou moins inclinées de 5°) et sont sensiblement identiques. Dans un autre exemple de configuration, les lignes intermédiaires 55 peuvent être inclinées suivant un angle supérieur à 5°.

Sur la figure 4 et de manière avantageuse, chaque ligne intermédiaire de transmission 55 comprend un premier pignon intermédiaire 49 monté rotatif autour d'un axe de rotation B. Les axes de rotation des pignons intermédiaires 49 sont également parallèles à l'axe longitudinal. Les deux pignons intermédiaires 49 comprennent chacun une denture externe 50 qui engrène avec une denture externe 51 du pignon d'entrée 40.

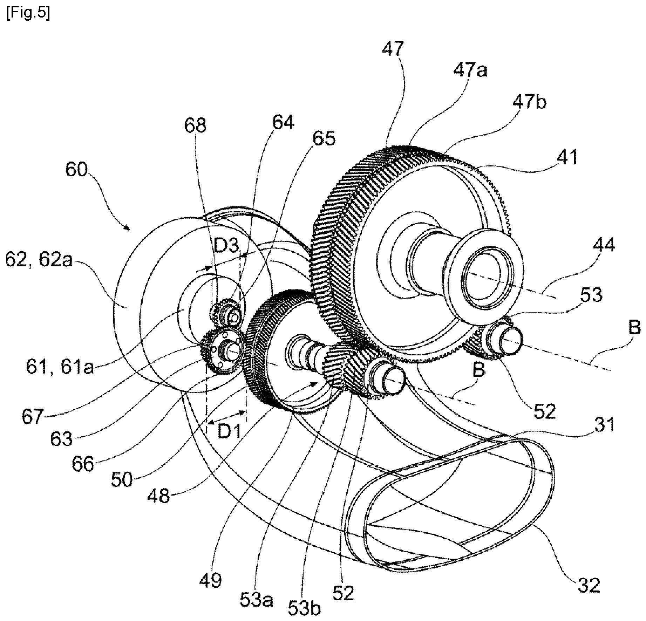

En référence aux figures 4 et 5, chaque ligne intermédiaire de transmission 55 comprend, de manière avantageuse, un deuxième pignon intermédiaire 52 montés rotatifs autour d'un axe de rotation C. Ce dernier est coaxial avec une ligne intermédiaire 55 correspondante. Les axes des deuxièmes pignons intermédiaires 52 sont également parallèles à l'axe longitudinal. Les deuxièmes pignons intermédiaires 52 comprennent chacun une denture externe 53 qui engrène avec la denture externe 47 du pignon de sortie 41.

De manière avantageuse, les premiers pignons intermédiaires 49 et les deuxièmes pignons intermédiaires 52 sont solidaires en rotation. En particulier, les premier pignon 49 et deuxième pignon 52 de chaque ligne intermédiaire 55 sont portés par un arbre 54. Avantageusement, mais non limitativement, l'arbre 54 s'étend entre une première extrémité et une deuxième extrémité. Chaque premier pignon intermédiaire 49 est disposé à la première extrémité de l'arbre 54 et chaque deuxième pignon intermédiaire 52 est disposé à la deuxième extrémité de l'arbre 54.

De manière avantageuse, les deuxièmes pignons intermédiaires 52 sont disposés en amont des premiers pignons intermédiaires 49.

La denture des pignons 40, 41, 49, 52, peut être droite (parallèle à l'axe longitudinal), hélicoïdales ou en chevron. De même, la denture des pignons peut être séparée en plusieurs hélices pour des raisons de fonctionnement, de montage, de fabrication, de contrôle, de réparation ou de rechange.

En référence aux figures 4 et 5, au moins un des pignons d'entrée, de pignon de sortie, des premiers pignons intermédiaires et deuxième pignons intermédiaires est séparé en deux demi-portions :
- une première portion constituée d'une jante laquelle porte la première hélice de la denture. Cette première hélice engrène avec celle d'un autre pignon du réducteur de vitesse ;
- une deuxième portion constituée d'une jante laquelle porte la deuxième hélice de la denture. Cette deuxième hélice engrène avec celle d'un autre pignon.

Dans le présent exemple de réalisation, le pignon d'entrée 40 comprend deux demi-portions portant respectivement une première hélice 51a et une deuxième hélice 51b. La première hélice 51a engrène avec une première hélice 50a de chacun des premiers pignon intermédiaire 49 et la deuxième hélice 51b engrène avec une deuxième hélice 50b de chacun des premiers pignons intermédiaire 49. Le pignon de sortie 41 comprend deux demi-portions portant respectivement une première hélice 47a et une deuxième hélice 47b. La première hélice 47a engrène avec une première hélice 53a de chacun des deuxièmes pignons 52 et la deuxième hélice 47b engrène avec une deuxième hélice 53b de chacun des deuxièmes pignons intermédiaires 52.

De manière avantageuse, la direction de la première hélice est différente de celle de la deuxième hélice. Les directions sont opposées.

Bien entendu, chacun des pignons peut être formé d'une seule pièce.

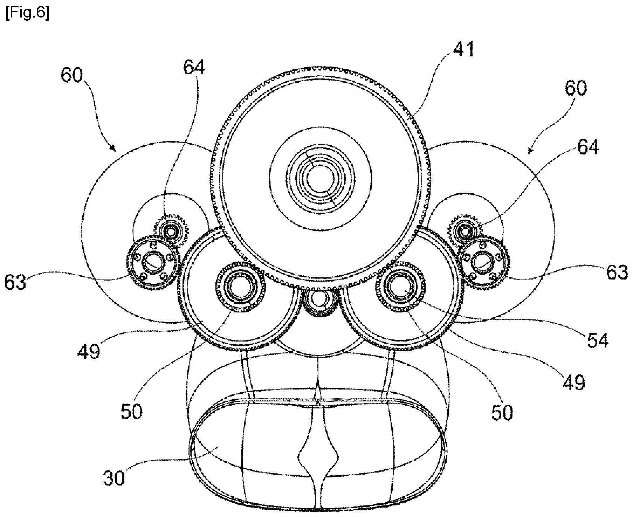

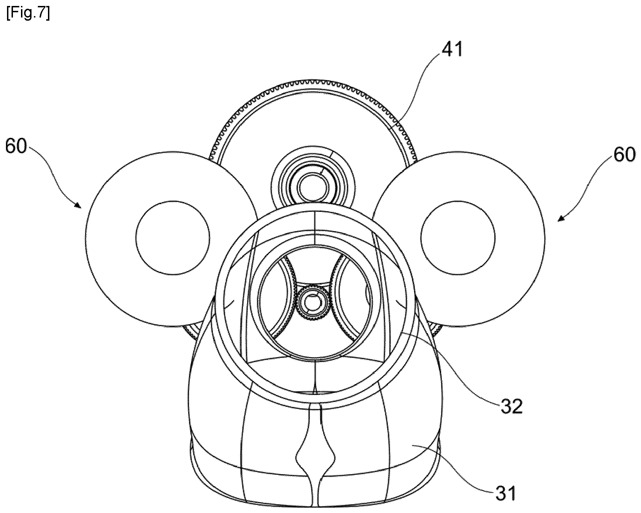

Comme cela est illustré sur les différentes figures 2 à 7, le réducteur de vitesse 4 coopère avec au moins une machine électrique 60. La machine électrique 60 est plus précisément disposée en aval du réducteur de vitesse 4 et dans le volume disponible pour le réducteur de vitesse 4. Cette configuration permet de limiter l'encombrement dans la turbomachine. La machine électrique 60 est configurée de manière à fournir de la puissance électrique à l'arbre d'hélice et à l'aéronef (mode générateur). La machine électrique peut également avantageusement prélever de la puissance mécanique sur l'arbre d'hélice (mode moteur). L'aéronef comprend pour cela un circuit électrique (non représenté) qui est relié d'une part, à la machine électrique 60 et d'autre part, à divers équipements de l'aéronef.

Dans le présent exemple, il y a deux machines électriques 60. L'agencement de deux machines électriques permet d'augmenter la puissance électrique pour alimenter les différents équipements.

En référence à la figure 4, chaque machine électrique 60 comprend un rotor 61 et un stator 62. Le rotor 61 est configuré pour être entraîné en rotation autour d'un axe de rotation D. L'axe de rotation est parallèle à l'axe longitudinal. En particulier, l'axe de rotation est également parallèle à l'axe de rotation des lignes intermédiaires 55. Le stator 62 est relié au carter 11 de la turbomachine.

Suivant une caractéristique avantageuse, le premier pignon intermédiaire 49 du réducteur de vitesse est destiné et configuré de sorte à entraîner en rotation le rotor 61 de chaque machine électrique 60.

Pour cela, le réducteur de vitesse 4 comprend au moins une roue d'entraînement 63 entraînée d'une part, par un premier pignon intermédiaire 49 et entrainant d'autre part, un pignon complémentaire 64. Dans le présent exemple, il y a avantageusement deux roues d'entraînement 63. En d'autres termes, il y a également deux pignons complémentaires 64, chacun étant entraîné via une roue d'entraînement 63.

Chaque pignon complémentaire 64 est avantageusement monté sur un rotor 61. Le pignon complémentaire 64 comprend un axe parallèle est coaxial à l'axe de rotation du rotor D.

De manière avantageuse, chaque rotor 61 représenté de manière schématique sur les figures présente un corps cylindrique 61a de section circulaire droit. Le corps cylindrique 61a peut être plein ou creux.

De manière avantageuse, mais non limitativement, le pignon complémentaire 64 est formé d'une seule pièce avec le rotor 61. Le pignon complémentaire 64 est dans ce cas monté radialement à l'extérieur d'un arbre 65 prolongeant le corps du rotor 61. De manière alternative, le pignon complémentaire 64 est rapporté sur l'arbre 65 du rotor 61.

Chaque roue d'entraînement 63 comprend une première denture externe 66 engrenant avec la denture externe 50 d'un pignon complémentaire 64. De manière avantageuse, mais non limitativement, le diamètre externe D1 (représenté sur les figures 3 et 5) de la première denture externe 66 est inférieur au diamètre externe D2 (également représenté sur la figure 3) du premier pignon complémentaire 49.

De manière avantageuse, chaque roue d'entrainement 63 comprend une deuxième denture externe 67 engrenant avec une denture externe 68 d'un pignon complémentaire 64. Suivant ce mode de réalisation, le diamètre externe D3 (représenté sur la figure 5) de la denture externe 68 est inférieur au diamètre D1 de la première denture externe 66.

Comme cela est représenté sur la figure 3, chaque roue d'entraînement 63 s'étend entre une première extrémité 63a et une deuxième extrémité 63b. La première denture externe 66 est disposée au niveau de la première extrémité 63a et la deuxième denture externe 67 est disposée au niveau de la deuxième extrémité 63b.

L'axe de rotation de chaque roue d'entrainement 63 est ainsi décalé des axes des pignons d'entrée et de sortie 40, 41.

De manière avantageuse, les dentures externes de chaque roue d'entraînement 63 restent dans le même plan radial. De manière générale, les pignons ne se déplacent pas suivant l'axe longitudinal.

Le stator 62 de la machine électrique 60 s'étend radialement à l'extérieur du rotor 61. De manière avantageuse, le stator 62 comprend un corps cylindrique 62ab coaxial avec l'axe du rotor 61. Dans le présent exemple, le stator 62 est fixé au carter 11. Le stator 62 est creux et reçoit le rotor 61 s'étendant à l'intérieur de celui-ci. En particulier, le corps cylindrique 62a comprend également un alésage interne.

Bien entendu, les stator 62 et rotor 61 peuvent avoir des formes différentes dès lors que ceux-ci soient complémentaires et intégrables facilement dans le volume disponible de la turbomachine.

Comme cela est visible sur les figures 5, 6 et 7, la turbomachine comprend également une entrée d'air 30 qui est agencée en-dessous du réducteur de vitesse 4 selon une direction verticale perpendiculaire à l'axe longitudinal. De manière avantageuse, l'entrée d'air 30 est prolongée vers l'aval par un manche d'air 31 qui s'étend en dessous du réducteur de vitesse 4. L'entrée d'air 30 est définie dans un plan radial qui est agencée en amont du pignon de sortie 41. De manière avantageuse, le manche d'air 31 présente avantageusement une forme en S. Le manche d'air 31 présente une sortie d'air 32 qui est définie dans un plan radial qui est situé en aval des machines électriques 60. Les machines électriques 60 et le réducteur de vitesse 4 sont situés en particulier dans une zone en creux du manche d'air 31 et délimite le volume disponible. Cela permettra de fournir différents types de puissances sans impacter l'encombrement dans le volume où est situé le réducteur de vitesse et aussi l'encombrement au sein du réducteur de vitesse 4.

Chaque machine électrique 60 peut fonctionner indifféremment en mode moteur et en mode générateur comme cela a été expliqué précédemment.

Dans le cas où chaque machine électrique 60 fonctionne en mode générateur (l'arbre d'hélice 3 ou la turbomachine envoie de la puissance vers les machines électriques 60), le pignon d'entrée 40 engrène avec les premiers pignons intermédiaires 49 comme cela est visible sur les figures 3, 4, 6 et 7. La rotation des premiers pignons intermédiaires 49 entraîne la rotation des deuxièmes pignons intermédiaires 52. La rotation des premiers pignons intermédiaires 49 entraîne également la rotation des pignons complémentaires 64 de chaque rotor 61 via les roues d'entraînement 63. De même, les deuxièmes pignons intermédiaires 52 engrènent avec le pignon de sortie 41 qui est couplé avec l'arbre d'hélice 3.

Dans le cas où chaque machine électrique 60 fonctionne en mode moteur (les machines électriques envoient de la puissance vers l'arbre d'hélice 3), les pignons complémentaires 64 de chaque rotor 61 est entraîné en rotation et entraînent les roues d'entraînement 63 via les dentures externes 68 qui engrènent avec les deuxièmes dentures 67. Les premières dentures externe 66 des roues d'entraînement 63 (qui portent également la première denture 66) entraînent le pignon de sortie 41 via les premier et deuxième pignons intermédiaires 49, 52.

## Revendications

1. Ensemble pour une turbomachine d'aéronef, l'ensemble comprenant :
- un arbre de puissance (2),
- un arbre d'hélice (3) centré sur un axe longitudinal (X), et
- au moins un réducteur de vitesse (4)comportant un pignon d'entrée (40) relié à l'arbre de puissance (2) et un pignon de sortie (41) relié à l'arbre d'hélice (3),
- deux machines électriques (60) qui sont chacune configurée de manière à fournir de la puissance électrique à l'arbre d'hélice (3) ou à prélever de la puissance mécanique sur l'arbre d'hélice (3),
**caractérisé en ce que** chaque machine électrique (60) comprend un rotor (61) et un stator (62), le stator (62) étant destiné à être relié à un carter (11) de la turbomachine, et **en ce que** le réducteur de vitesse (4) comprend deux lignes intermédiaires de transmission (55) qui sont sensiblement parallèles et qui sont configurées pour transmettre le couple du pignon d'entrée (40) au pignon de sortie (41), chaque rotor (61) étant entraîné en rotation respectivement par un pignon d'une ligne intermédiaire (55).

2. Ensemble selon la revendication précédente, **caractérisé en ce que** le pignon d'entrée (40) comprenant un axe d'entrée (43) décalé par rapport à un axe de sortie du pignon de sortie (41) qui est coaxial à l'axe longitudinal (X).

3. Ensemble selon l'une des revendications précédentes, **caractérisé en ce que** chaque ligne intermédiaire de transmission (55) comprend un premier pignon intermédiaire (49) monté rotatif autour d'un axe de rotation et comprenant une première denture destinée à engrener avec une denture externe (51) du pignon d'entrée (40).

4. Ensemble selon l'une des revendications précédentes, **caractérisé en ce que** chaque ligne intermédiaire de transmission (55) comprend un deuxième pignon intermédiaire (52) monté rotatif autour d'un axe de rotation et comprenant une deuxième denture (53) destinée à engrener avec une denture externe (47) du pignon de sortie (41).

5. Ensemble (1) selon les revendications 3 et 4, **caractérisé en ce que** le pignon d'entrée (40) engrène avec deux premiers pignons intermédiaires (49) des lignes de transmission intermédiaire (55) et le pignon de sortie (41) engrène avec deux deuxièmes pignons intermédiaires (52) des lignes de transmission intermédiaire (55) et **en ce que** chaque premier pignon intermédiaire (49) et chaque deuxième pignon intermédiaire (52) comprend une première hélice (50a, 53a) et une deuxième hélice (50b, 3b) s'engrenant chacune avec une hélice correspondante (47a, 47b, 51a, 51b) du pignon d'entrée (40) et du pignon de sortie (41).

6. Ensemble selon la revendication 3 ou les revendications 3 et 4 ou la revendication 5, **caractérisé en ce que** le réducteur de vitesse (4) comprend au moins deux roues d'entraînement (63) qui sont chacune d'une part, entraînée en rotation respectivement par le premier pignon intermédiaire (49) d'une ligne de transmission intermédiaire (55) et qui d'autre part, entraîne en rotation un pignon complémentaire (64) monté sur chaque rotor (61), le pignon complémentaire (64) du rotor (61) comprenant un axe de rotation parallèle à l'axe d'entrée (43) et parallèle à l'axe de la roue d'entraînement (63).

7. Ensemble selon la revendication précédente, **caractérisé en ce que** chaque roue d'entraînement (63) comprend une première denture externe (66) engrenant avec une denture externe d'un premier pignon intermédiaire (49) et une deuxième denture externe (67) engrenant avec une denture externe (68) du pignon complémentaire (64).

8. Ensemble selon l'une quelconque des revendications précédentes, **caractérisé en ce que** le stator (62) s'étend radialement à l'extérieur du rotor (61).

9. Ensemble (1) selon l'une quelconque de revendications précédentes, **caractérisé en ce que** les machines électriques (60) sont agencées en aval du réducteur de vitesse.

10. Ensemble (1) selon l'une quelconque de revendications précédentes, **caractérisé en ce que** la ou chaque machine électrique (60) est annulaire.

11. Turbomachine (1) comprenant un ensemble selon l'une quelconque des revendications précédentes et une entrée d'air (30) agencée en-dessous du réducteur de vitesse (4), selon une direction verticale perpendiculaire à l'axe longitudinal (X).
